# FASCICULE DE BREVET EUROPEEN

(11) **EP 2 473 336 B1**
(45) Date de publication et mention de la délivrance du brevet: **17.07.2013**
(21) Numéro de dépôt: 10763785.2
(22) Date de dépôt: 31.08.2010
(51) Int. Cl.: B29C 70/48, B29C 33/40

(54) **DISPOSITIF DE MOULAGE DESTINÉ À RECEVOIR DES FIBRES ET UNE RÉSINE PAR INJECTION ET PROCÉDÉ DE FABRICATION CORRESPONDANT**
FORMVORRICHTUNG ZUR AUFNAHME VON FASERN UND HARZ MITTELS INJEKTION UND ENTSPRECHENDES VERFAHREN
MOLDING DEVICE FOR RECEIVING FIBERS AND A RESIN BY INJECTION AND CORRESPONDING METHOD OF FABRICATION

(30) Priorité: 04.09.2009 FR 0904207
(43) Date de publication de la demande: 11.07.2012
(73) Titulaire: Société Lorraine de Construction Aéronautique, 57190 Florange (FR)
(72) Inventeur: PATRIGEON, Olivier, F-92000 Nanterre (FR)
(74) Mandataire: Gaillarde, Frédéric F. Ch.
(86) Numéro de dépôt international: PCT/FR2010/051811
(87) Numéro de publication internationale: WO 2011/027074

(56) Documents cités:
- WO-A2-2006/096647
- DE-A1- 3 644 434
- GB-A- 2 242 389
- US-A- 3 137 750
- US-A1- 2002 145 218

## Description

La présente invention concerne un dispositif de moulage destiné à recevoir des fibres sur lesquelles une résine est injectée comprenant un socle, des plateaux latéraux enserrant le socle et un couvercle apte à coopérer avec une extrémité des plateaux libres pour délimiter un espace interne destiné à recevoir les fibres et la résine.

Les dispositifs de moulage comprennent usuellement un socle, ou encore appelé « tube », enserré par des plateaux latéraux formant une ou plusieurs parois latérales. Ainsi, il est formé un récipient apte à contenir de la matière.

Un couvercle est appliqué au niveau d'une extrémité libre desdits plateaux de sorte à fermer le dispositif de moulage et également à former un espace interne destiné à recevoir la résine et les fibres.

Les plateaux latéraux ou le couvercle contiennent des moyens permettant d'injecter la résine dans le dispositif de moulage selon le procédé dit RTM (« resin transfert molding »).

Une fois assemblé, ce type de dispositif de moulage permet de donner la forme voulue aux fibres imprégnées de résine lorsque cette dernière refroidit.

Cependant, les éléments formant ce type de dispositif de moulage sont métalliques, par exemple réalisés en aluminium ou en acier. Lors de la fermeture dudit dispositif par le couvercle, il arrive que les fibres se plissent engendrant un pincement de certaines d'entre elles et ainsi des défauts qui sont pénalisant lorsqu'on fabrique des matériaux destinés à l'aéronautique.

Un but de la présente invention est donc de fournir un dispositif de moulage évitant d'endommager les fibres lors du moulage de la résine.

A cet effet, selon un premier aspect, l'invention a pour objet un dispositif de moulage destiné à recevoir des fibres sur lesquelles une résine est injectée comprenant un socle, des plateaux latéraux enserrant le socle et un couvercle apte à coopérer avec une extrémité libre des plateaux latéraux pour délimiter un espace interne destiné à recevoir les fibres et la résine, caractérisé en ce qu'il comporte dans l'espace interne une peau pleine configurée pour épouser la surface interne du couvercle et au moins une partie de la surface interne des plateaux latéraux.

La peau disposée dans l'espace interne du dispositif de l'invention est apte à tapisser la surface interne du couvercle et la surface interne d'au moins une partie des plateaux latéraux empêchant les fibres d'être en contact avec les coins supérieurs du dispositif de l'invention formés lors de la fermeture du dispositif. De ce fait, on limite de manière importante le plissement des fibres et aussi le pincement de ces dernières. La pièce ainsi produite présente alors moins de défauts et une meilleure résistance mécanique.

Selon d'autres caractéristiques de l'invention, le dispositif de l'invention comporte l'une ou plusieurs des caractéristiques optionnelles suivantes considérées seules ou selon toutes les combinaisons possibles :
- la peau recouvre sensiblement la totalité de la surface interne des plateaux latéraux ;
- la peau est réalisée dans un matériau résistant à une température supérieure à 200°C, notamment du silicone ;
- l'étanchéité des plateaux latéraux et du couvercle est réalisée par des joints toriques ;
- la peau a une épaisseur sensiblement constante.

Selon un autre aspect, l'invention a pour objet un procédé de fabrication d'une pièce en résine utilisant le dispositif de l'invention, comprenant les étapes où:
A- on assemble le socle et les plateaux latéraux ;
B- on dispose des fibres à l'intérieur de l'espace formé par le socle et les plateaux latéraux;
C- on dépose le couvercle dont la surface intérieure est tapissée par la peau, sur l'extrémité libre des plateaux latéraux formant ainsi le dispositif de moulage ;
D- on injecte la résine dans l'espace interne comprenant les fibres du dispositif de moulage.

De manière préférentielle, au cours de l'étape B, les fibres employées forment un tissu sec, un tissu cousu ou une préforme tissée.

L'invention sera davantage comprise à la lecture de la description non limitative qui va suivre, faite en référence aux figures ci-annexées.
- La figure 1 est une vue en perspective d'un mode de réalisation d'un dispositif de l'invention ;
- La figure 2 est une coupe transversale II-II du mode de réalisation représenté à la figure 1.

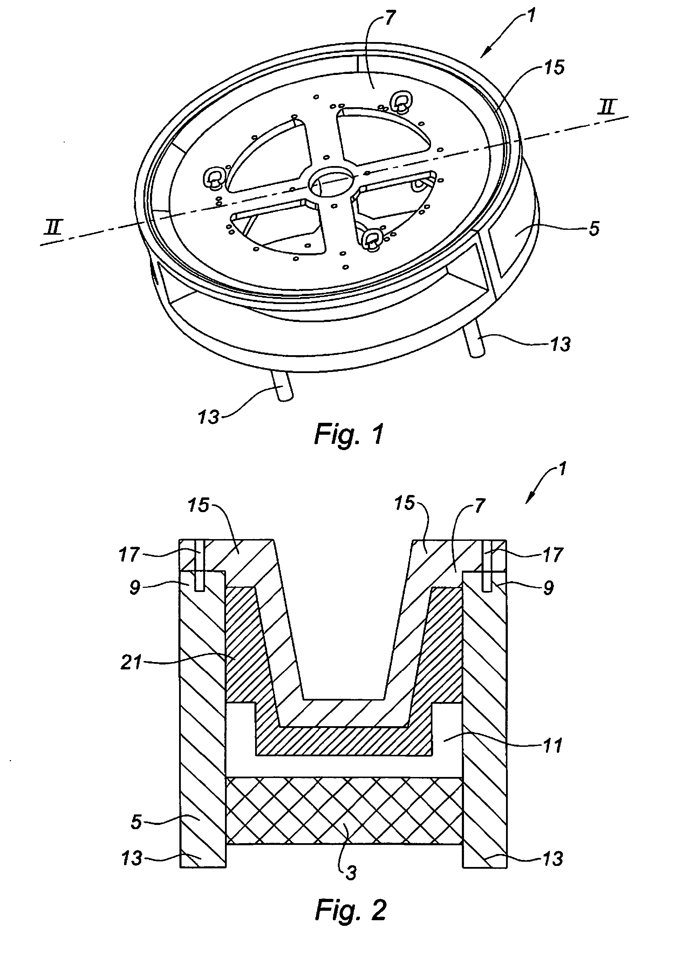

Comme illustré sur les figures 1 et 2, le dispositif de l'invention 1 est apte à mouler de la résine injectée pour former des pièces en résine destinées à l'industrie aéronautique. Ainsi, on peut fabriquer toutes pièces de révolution telles qu'une virole, par exemple.

A titre d'exemple de résine employée, on peut citer la résine époxy.

Le dispositif 1 de l'invention comprend un socle 3, encore appelé « tube », des plateaux latéraux 5 enserrant le socle 3 et un couvercle 7 apte à coopérer avec une extrémité libre 9 des plateaux latéraux 5 en délimitant un espace interne 11 pour recevoir la résine et les fibres.

Le socle 3 peut être de toute forme appropriée pour donner la forme voulue à l'une des surfaces de la pièce formée. Ainsi, le socle 3 peut notamment être de forme sensiblement cylindrique à section sensiblement circulaire. Les dimensions du socle sont définies pour pouvoir soutenir la pression d'injection choisie pour la pièce.

Les plateaux latéraux 5 sont formés d'une ou de plusieurs parois configurées pour épouser la surface périphérique du socle 3. Il est possible comme illustré sur la figure 2 qu'une partie des plateaux latéraux 5 servent de pieds 13 au dispositif 1 de l'invention. Pour ce faire, le socle 3 est enserré à une distance non nulle suffisante d'une extrémité des plateaux latéraux 5. Selon une variante, des pieds peuvent être rapportés sur les plateaux latéraux 5 et le socle 3.

Les dimensions des plateaux latéraux 5 sont définies pour pouvoir soutenir la pression d'injection choisie pour la pièce, qui peut être par exemple supérieure à 1,5 bar.

Le couvercle 7 peut présenter toute forme appropriée pour donner la forme désirée à la pièce. Ainsi, comme représenté sur les figures, le couvercle 7 peut présenter une section transversale de forme sensiblement en U ou en V. Afin de fermer le dispositif 1 de l'invention, le couvercle 7 peut comporter deux extrémités 15 se projetant au-dessus de l'extrémité libre 9 des plateaux latéraux 5 ou coopérant avec cette dernière. Le dispositif 1 de l'invention peut comporter des moyens de fermeture 17 assurant la fermeture dudit dispositif 1. Lesdits moyens 17 peuvent être, par exemple, des boulons.

Les dimensions du couvercle 7 sont définies pour pouvoir soutenir la pression d'injection choisie pour la pièce, qui peut être par exemple supérieure à 1,5 bar.

Typiquement, le socle 3, les plateaux latéraux 5 et le couvercle 7 sont réalisés dans un matériau métallique tel que l'aluminium ou l'acier, par exemple.

Lors de l'assemblage du dispositif de l'invention 1, l'étanchéité des plateaux latéraux 5 et du couvercle 7 peut être réalisée par des moyens d'étanchéité, comme des joints toriques.

Le dispositif 1 de l'invention comporte dans l'espace interne 11 une peau 21 configurée pour épouser la surface interne du couvercle 7 et au moins une partie de la surface interne des plateaux latéraux 5. Dans une variante, la peau 21 recouvre sensiblement la totalité de la surface des plateaux latéraux 5. Pour cela, la peau suit sensiblement la surface formée par le couvercle 7 et la partie des plateaux latéraux 5. Ainsi, les fibres disposées dans l'espace interne 11 ne peuvent plus être en contact avec les coins formés par le couvercle 7 et l'extrémité des plateaux latéraux 5. Ainsi, de manière avantageuse, on évite le plissement et le pincement des fibres.

La peau 21 est réalisée dans un matériau résistant à la température d'injection de la résine, à savoir une température supérieure à 200°C.

A titre d'exemple, la peau 21 est en silicone. Le silicone présente l'avantage d'être un matériau résistant vis-à-vis des températures indiquées ci-dessus et inerte vis-à-vis de la plupart des résines employées.

En outre, le silicone présente l'avantage d'avoir un coefficient de dilatation lui permettant de se dilater à une température supérieure à 200°C. De ce fait, la silicone est capable de se ramollir grâce à la chaleur régnant dans le dispositif de l'invention lors du moulage de la pièce et donc d'assurer une pression régulière sur la pièce afin de compacter les fibres sans plissement de matière.

Ainsi, le dispositif de l'invention 1 permet de conserver l'intégrité de des fibres imprégnées de résine et donc de fabriquer des pièces en résine de meilleure qualité.

La peau 21 a une épaisseur sensiblement constante permettant d'obtenir un compactage constant. L'épaisseur de la peau 21 est choisie en fonction du volume de la pièce à réaliser. En effet, la peau 21 représente un film qui ne doit pas impacter sur le volume de la pièce finale réalisée et qui ne doit pas être encombrant dans l'espace interne 11. Ainsi, la peau 21 est suffisament fine pour ne pas impacter sur la forme de la pièce ainsi fabriquée et sufffisamment épaisse pour lisser tout défaut de surface interne des éléments formant le dispositif de l'invention 1.

Le dispositif 1 de l'invention comprend en outre des moyens pour recevoir la résine par injection, notamment des ouvertures aptes à recevoir de tuyaux injectant ladite résine dans l'espace interne 11.

Par ailleurs, l'invention comporte également un procédé de fabrication d'une pièce en résine utilisant le dispositif 1 de l'invention, comprenant les étapes où:
A- on assemble le socle 3 et les plateaux latéraux 5 ;
B- on dispose des fibres à l'intérieur de l'espace formé par le socle et les plateaux latéraux;
C- on dépose le couvercle 7 dont la surface intérieure est tapissée par la peau 21, sur l'extrémité libre 9 des plateaux latéraux formant ainsi le dispositif de moulage 1;
D- on injecte la résine dans l'espace interne 11 comprenant les fibres du dispositif de moulage 1.

De manière préférentielle, au cours de l'étape B, les fibres employées forment un tissu sec, un tissu cousu ou une préforme tissée.

Dans l'étape D, on injecte la résine entre 20°C et 150°C avec une pression comprise entre 1,5 bar et 15 bars.

## Revendications

1. Dispositif de moulage (1) destiné à recevoir des fibres sur lesquelles une résine est injectée comprenant un socle (3), des plateaux latéraux (5) enserrant le socle (3) et un couvercle (7) apte à coopérer avec une extrémité libre (9) des plateaux latéraux (5) pour délimiter un espace interne (11) destiné à recevoir les fibres et la résine, **caractérisé en ce qu'**il comporte dans l'espace interne (11) une peau pleine (21) configurée pour épouser la surface interne du couvercle (7) et au moins une partie de la surface interne des plateaux latéraux (5).

2. Dispositif (1) selon la revendication précédente, dans lequel la peau (21) est réalisée dans un matériau résistant à une température supérieure à 200°C.

3. Dispositif (1) selon la revendication précédente, dans lequel la peau (21) est en silicone.

4. Dispositif (1) selon l'une quelconque des revendications précédentes, dans lequel l'étanchéité des plateaux latéraux (5) et du couvercle (7) est réalisée par des joints toriques.

5. Procédé de fabrication d'une pièce en résine utilisant le dispositif (1) selon l'une quelconque des revendications précédentes, comprenant les étapes où:
A- on assemble le socle (3) et les plateaux latéraux (5) ;
B- on dispose des fibres à l'intérieur de l'espace formé par le socle (3) et les plateaux latéraux (5);
C- on dépose le couvercle (7) dont la surface intérieure est tapissée par la peau (21), sur l'extrémité libre (9) des plateaux latéraux formant ainsi le dispositif de moulage (1);
D- on injecte la résine dans l'espace interne (11) comprenant les fibres du dispositif de moulage (1).

6. Procédé selon la revendication précédente, dans lequel les fibres employées forment un tissu sec, un tissu cousu ou une préforme tissée.

## Patentansprüche

1. Formvorrichtung (1) zur Aufnahme von Fasern, auf die ein Harz gespritzt wird, die einen Sockel (3), den Sockel (3) umschließende Seitenplatten (5) und einen Deckel (7) umfasst, der imstande ist, mit einem freien Ende (9) der Seitenplatten (5) zusammenzuarbeiten, um einen Innenraum (11) zu begrenzen, der zur Aufnahme der Fasern und des Harzes bestimmt ist, **dadurch gekennzeichnet, dass** sie im innenraum (11) eine Vollhaut (21) aufweist, die kohfigunert ist, um an der Innanfläche des Deckels (7) und an mindestens einem Abschnitt der Innenfläche der Seitenplatten (5) anzuliegen.

2. Vorrichtung (1) nach vorangehendem Anspruch, wobei die Haut (21) aus einem Material hergestellt ist, die gegenüber einer Temperatur über 200 °C beständig ist.

3. Vorrichtung (1) nach vorangehendem Anspruch, wobei die Haut (21) aus Silikon ist.

4. Vorrichtung (1) nach einem der vorangehenden Ansprüche, wobei die Seitenplatten (5) und der Deckels (7) durch O-Ring-Dichtungen abgedichtet sind.

5. Herstellungsverfahren eines Teils aus Harz, das die Vorrichtung (1) nach einem der vorangehenden Ansprüche verwendet, das die Schritte umfasst, bei denen:
A- der Sockel (3) und die Settenplatten (5) verbunden werden,
B- Fasern in dem Raum angeordnet werden, der von derh Sockel (3) und den Seitenplatten (5) gebildet wird.
C- der Deckel (7), dessen Innenfläche mit der Haut (21) tapeziert ist, auf dem freien Ende (9) der Seitehplatten angeordnet wird, wodurch die Formvorrichtung (1) gebildet wird,
D- das Harz in den Innenraum (11) gespritzt wird, der die Fasern der Formvorrichtung (1) umfasst.

6. Verfahren nach vorangehendem Anspruch, wobei die verwendeten Fasern ein trockenes Gewebe, ein genähtes Gewebe oder eine gewirkte Vorform bilden.

## Claims

1. A molding device (1) intended to receive fibers onto which a resin is injected, comprising a base (3), side plates (5) clasping the base (3) and a lid (7) capable of cooperating with a free end (9) of the side plates (5) for delimiting an internal space (11) intended to receive the fibers and the resin, **characterized in that** it includes in the internal space (11) a solid skin (21) configured for closely fitting the internal surface of the lid (7) and at least one portion of the internal surface of the side plates (5).

2. The device (1) according to the preceding claim, wherein the skin (21) is made in a material withstanding a temperature above 200°C.

3. The device (1) according to the preceding claim, wherein the skin (21) is in silicone.

4. The device (1) according to any of the preceding claims, wherein the seal of the side plates (5) and of the lid (7) is achieved with O-ring gaskets.

5. A method for manufacturing a part in resin using the device (1) according to any of the preceding claims, comprising the steps wherein:
A- the base (3) and the side plates (5) are assembled;
B- fibers are positioned inside the space formed by the base (3) and the side plates (5);
C- the lid (7), the interior surface of which is covered with the skin (21), is deposited on the free end (9) of the side plates thereby forming the molding device (1);
D- the resin is injected into the internal space (11) comprising the fibers of the molding device (1).

6. The method according to the preceding claim, wherein the fibers used form a dry fabric, a sewn fabric or a woven preform.
